# EUROPÄISCHE PATENTSCHRIFT

(11) **EP 0 824 335 B1**
(45) Veröffentlichungstag und Bekanntmachung des Hinweises auf die Patenterteilung: **25.11.1998**
(21) Anmeldenummer: 96914843.6
(22) Anmeldetag: 03.05.1996
(51) Int. Cl.: A47J 37/04, A47J 37/07

(54) **GRILLGERÄT**
BARBECUE
BARBECUE

(30) Priorität: 06.05.1995 DE 19516715; 04.03.1996 DE 19608175
(43) Veröffentlichungstag der Anmeldung: 25.02.1998
(73) Patentinhaber: Sprick, Hermann-Josef, 49774 Vinnen (DE)
(72) Erfinder: Sprick, Hermann-Josef, 49774 Vinnen (DE)
(74) Vertreter: Habbel, Hans-Georg, Dipl.-Ing.
(86) Internationale Anmeldenummer: DE9600784
(87) Internationale Veröffentlichungsnummer: WO9634549

(56) Entgegenhaltungen:
- DE-A- 1 454 157
- DE-A- 2 425 860
- DE-U- 7 536 710
- US-A- 2 576 028

## Beschreibung

Die Erfindung betrifft ein Grillgerät gemäß dem Oberbegriff des Hauptanspruches.

Bei den bekannten Grillgeräten, die beispielsweise mit Holzkohle beheizt werden, wird das Grillgut, wie beispielsweise Würstchen, Koteletts u. dgl. per Hand auf dem Grillrost gedreht, um eine gleichmäßige Garung des Grillgutes zu erreichen. Dies kann insbesondere, wenn sich viel Grillgut auf dem Rost befindet, sehr zeitaufwendig sein und darüber hinaus ist es störend, daß sich die Person am Grill den Rauchschwaden des Grillens aussetzen muß.

Um ein automatisches Wenden des Grillgutes zu erreichen, ist es auch bekannt, einen Spieß zu verwenden, der automatisch gedreht werden kann. Ein solcher Spieß ist beispielsweise für große Braten u. dgl. zu verwenden, jedoch nicht für kleine Würstchen und insbesondere flächiges Grillgut, wie Koteletts u. dgl. Dieses Grillgut benötigt einen flächigen Grillgutträger, um eine Vielzahl von kleinerem Grillgut gleichzeitig grillen zu können, oder aber für flächiges Grillgut, wie Steaks u. dgl., und im Stand der Technik sind bereits Vorrichtungen bekannt, die es ermöglichen, flächige Grillgutträger einerseits drehbar auszugestalten und andererseits während der Drehung den Grillgutträger von der Heizvorrichtung zu entfernen, um zu verhindern, daß bei der Drehung des flächigen Grillrostes der Grillrost vor die Heizvorrichtung stößt. Nach der durchgeführten Drehung wird der Grillgutträger wieder in die Nähe der Heizvorrichtung verbracht, um eine möglichst gute Ausnutzung der Wärme auf das Grillgut zu erreichen.

Ein entsprechendes Grillgerät ist beispielsweise aus der gattungsbildenden DE-A-1 454 157 bekannt, sowie aus der DE-U-75 36 710.

Bei dem aus der DE-A-1 454 157 bekannten Grillgerät ist nachteilhaft, daß die Vorrichtung zum Drehen und zum Heben bzw. Absenken des Grillgutträgers aufwendig ausgebildet ist und daher zum einen kostenintensiv in der Herstellung ist und andererseits störungsanfällig ist.

Der Erfindung liegt die Aufgabe zugrunde, ein gattungsgemäßes Grillgerät dahingehend weiter zu entwickeln, daß sowohl die Hebe- als auch die Drehbewegung eines flächigen Grillrostes mit einer Vorrichtung durchgeführt wird, die besonders kostengünstig herzustellen ist und darüber hinaus robust ist.

Diese der Erfindung zugrundeliegende Aufgabe wird durch die Lehre des Hauptanspruches gelöst.

Mit anderen Worten ausgedrückt wird ein Grillgerät vorgeschlagen, bei dem für die Hebe- und Drehbewegung des flächigen Grillrostes ein Gestänge vorgesehen ist, das im wesentlichen aus einem motorisch schwenkbar ausgebildeten Hebearm und Schwenkarm besteht, wobei der Hebearm geführt ist und Vorrichtungen vorgesehen sind, um eine Führung des Schwenkarmes an dem sich bewegenden Hebearm zumindest für einen Teil des Schwenkbereiches zu erreichen. Zum einen wird durch die Verwendung des hebelartigen Schwenkarmes und des hebelartigen Hebearmes erreicht, daß der Antrieb zu einer gemeinsamen Hebe- und Drehbewegung des Grillgutträgers einfach und kostengünstig ausgebildet sein kann, und durch die zumindest zeitweise stattfindende Zwangsführung des Hebe- und Schwenkarmes wird erreicht, daß jeweils eine Drehung des Grillgutträgers um 180° stattfindet, und wodurch verhindert wird, daß sich der Grillgutträger wieder zurück auf die Seite dreht, die bereits vor Beginn der Drehung der Heizvorrichtung zugewandt war.

Vorteilhafte Ausgestaltungen der Erfindung sind in den Unteransprüchen erläutert.

Ein Ausführungsbeispiel der Erfindung wird nachfolgend in den Zeichnungen wiedergegeben, wobei
- Fig. 1: schaubildlich ein Grillgerät darstellt,
- Fig. 2: zeigt die Stirnseite des in Fig. 1 dargestellten Grillgerätes,
- Fig. 3: zeigt die Stirnseite des Grillgerätes bei hochgeklapptem Grillgutträger und
- Fig. 4: zeigt den Grillgutträger in einer weiteren Position.

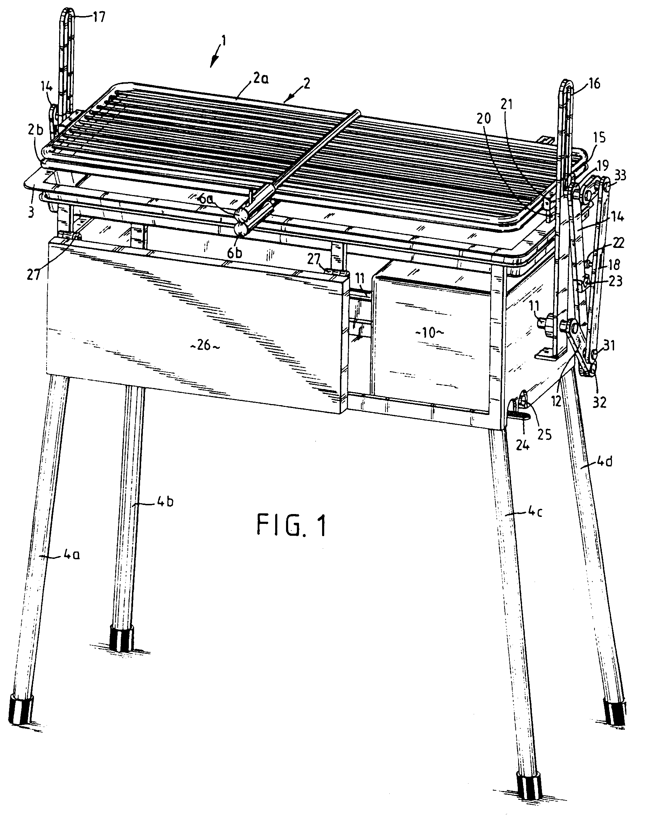

Bezugnehmend auf Fig. 1 ist ein Grillgerät 1 dargestellt, das im wesentlichen aus einem Grillgutträger 2 besteht, der in diesem Ausführungsbeispiel als Grillrost ausgebildet ist, einer Aufnahmeschale 3 für die Grillkohle, Grillbriketts od. dgl. sowie Standbeinen 4a bis 4d. Die Aufnahmeschale 3 kann leicht aus der Grillvorrichtung herausgenommen und gesäubert werden.

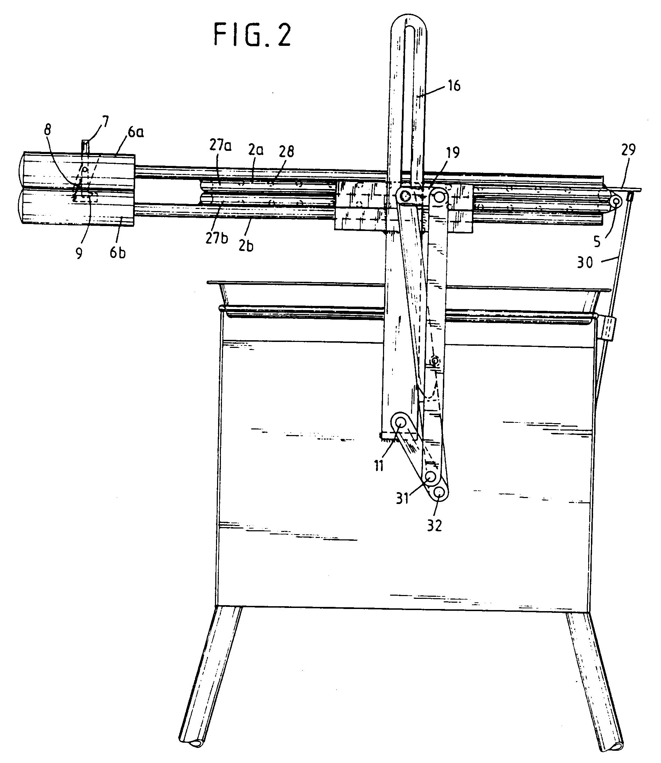

Der Grillrost 2 besteht aus einem oberen Grillrost 2a und einem unteren Grillrost 2b, die beide miteinander über ein Gelenk 5 verbunden sind, wie aus Fig. 2 ersichtlich ist. An dem oberen und unteren Grillrost 2a, 2b befindet sich ein Handgriff 6a und 6b, so daß die Grillroste 2a und 2b leicht auf- und zugeklappt werden können, um das Grillgut zwischen ihnen leicht erreichen zu können. Wie in Fig. 2 ersichtlich, ist der obere Handgriff 6a mit einem schwenkbar gelagerten Haken 7 ausgebildet, der über eine Feder 8 stets in seine Ruhestellung gedrückt wird. An seinem unteren Ende weist der Haken 7 eine Nase 9 auf, die eine Kante des unteren Handgriffes 6b hintergreift. In der in Fig. 2 dargestellten Stellung hält der Haken 7 die beiden Roste 2a und 2b zusammen, so daß bei einer Drehung dieser Roste nicht die Gefahr besteht, daß das Grillgut zwischen den Rosten herunterfällt. Bei einem Druck gegen das obere Ende des Hakens 7 gegen die Federlast kommt die Nase 9 des Hakens 7 frei und der obere Grillrost 2a kann aufgeschwenkt werden.

Um ein Wenden des Grillgutträgers 2 zu ermöglichen, ist in einem Gehäuse 10 ein Antrieb vorgesehen, der in diesem Ausführungsbeispiel von einem herkömmlichen Scheibenwischermotor eines Kraftfahrzeuges gebildet wird. Über nicht dargestellte Zahnkränze und eine nicht dargestellte Kette erfolgt die Antriebsübertragung auf eine Welle 11, die an ihrem einen Ende einen Schwenkhebel 12 trägt. Die Energieversorgung des Motors kann beispielsweise über eine Batterie oder direkt über ein Stromkabel erfolgen.

An dem fest auf der Welle 11 angeordneten Schwenkhebel 12 ist ein Hebearm 14 angeordnet, der anderenendes einen Bolzen 15 trägt, der an dem Grillgutträger 2 angeordnet ist. Der Bolzen 15 ist in einer Ausnehmung des Trägers 20 angeordnet. Durch leichtes Auseinanderdrücken der Führungen 16 kann der gesamte Grillgutträger 2 z. B. zum Säubern entnommen werden. Der Bolzen 15 ist wie ein Kulissenstein in einer vertikal ausgerichteten Führung 16 geführt, die als vertikal ausgerichtete Ausnehmung ausgebildet ist, so daß die Schwenkbewegung des Schwenkhebels 12 in eine rein vertikal ausgerichtete Bewegung umgesetzt wird. Auf der gegenüberliegenden Seite des Grillgerätes 1 ist ebenfalls eine Führung 17 ausgebildet und in entsprechender Weise wird in dieser Führung 17 ein zweiter Hebearm 14 geführt, der über einen nicht dargestellten Schwenkhebel 12 mit dem anderen Ende der Welle 11 verbunden ist.

Der Schwenkhebel 12 trägt ebenfalls einen Schwenkarm 18, dessen Drehpunkt am Schwenkhebel 12 gegenüber dem Drehpunkt des Hebearmes 14 nach innen versetzt ausgebildet ist. Der Schwenkarm 18 ist mit einem oberen Schwenkhebel 19 verbunden, der wiederum fest mit dem Bolzen 15 verbunden ist. Bei einem Schwenken des oberen Schwenkhebels 18 wird diese Schwenkbewegung über den Bolzen 15 auf den Grillgutträger 2 übertragen, der ebenfalls eine Schwenkbewegung vornimmt.

Der Schwenkhebel 12 ist somit drehfest in der Welle 11 verbunden, genauso der obere Schwenkhebel 19 mit dem Bolzen 15. Die übrigen Drehpunkte 31, 32, 33 ermöglichen jeweils eine Drehbewegung der jeweiligen Bolzen und Hebel.

Um stets eine waagerechte Grillstellung des Grillgutträgers 2 zu erreichen, ist ein an der Führung 16 angeordneter Träger 20 vorgesehen, auf dem während der Grillposition eine Halterung 21 aufliegt, die an dem unteren Grillrost 2b angeordnet ist.

An der Innenseite des Schwenkarmes 18 ist ein Führungsbolzen 22 angeordnet und gegenüber ist an der Außenseite des Hebearmes 14 eine in etwa V-förmig ausgebildete Klaue 23 vorgesehen. Wie später in den weiteren Figuren erkennbar sein wird, gerät der Führungsbolzen 22 bei einer Bewegung des Schwenk- und Hebearmes in den Bereich der Klaue 23, so daß sich durch die Klaue 23 eine Zwangsführung des Schwenkarmes 18 ergibt.

Der Motor wird über einen Schalter 24 in Betrieb gesetzt bzw. wieder abgestellt; das Zeitintervall, in dem sich der Motor in Betrieb setzt, um den Grillgutträger 2 zu drehen bzw. die Pausen können über einen aus Übersichtlichkeitsgründen nicht dargestellten Schalter eingestellt werden; über einen Druckschalter 25 kann jedoch der Motor bei Drücken des Druckschalters 25 immer in Betrieb gesetzt werden, ohne Berücksichtigung des eingestellten Zeitintervalles, wenn es z. B. erforderlich ist, den Rost sofort hochzuschwenken, um z. B. ein Verkohlen des Grillgutes zu verhindern.

Weiterhin weist das Grillgerät 1 eine Tischplatte 26 auf, die über Scharniere 27 an dem Grillgerät 1 angeordnet ist und bei Bedarf hochgeklappt und über einen nicht dargestellten Stützmechanismus in der waagerechten Stellung arretiert werden kann.

Bezugnehmend auf Fig. 2 ist die Seitenansicht des Grillgerätes 1 dargestellt; der Grillgutträger 2 befindet sich in seiner waagerechten Grillstellung, d. h. die Entfernung zu der Aufnahmeschale 3 für Kohlen od. dgl. bzw. sonstigen Heizvorrichtungen, wie z. B. elektrischen Heizschlangen, ist gering. Der obere und untere Grillrost 2a, 2b bestehen jeweils aus einem Rahmen 27a, 27b, der wiederum Querroste 28 trägt. Zwischen den Querrosten der oberen und unteren Grillroste 2a und 2b ist ein Zwischenraum, in dem das Grillgut gehalten wird.

Der obere Grillrost 2a trägt einen Kontaktgeber 29 für einen Stößel 30, der wiederum mit einem Ausschalter für den Motor verbunden ist. Wenn der obere Grillrost 2a aufgeklappt wird, drückt der Kontaktgeber 29 den Stößel 30 zurück und der Motor wird ausgestellt bzw. kann nicht nach Ende seines Ruheintervalles starten. Dies hat den Vorteil, daß bei aufgeklapptem Grillrost 2a eine ungewollte Drehung des gesamten Grillgutträgers 2 vermieden wird.

Wenn nach dem Ende des Ruhezeitintervalles der Motor automatisch in Betrieb gesetzt wird, dreht sich die Welle 11 und der daran angeordnete Schwenkhebel 12. Dadurch wird der Hebearm 14 angehoben sowie der daran angeordnete Bolzen 15, der sich innerhalb der Führung 16 bewegt. Während dieser Aufwärtsbewegung des Hebearmes 14, über die der Grillgutträger 2 von der Aufnahmeschale 3 entfernt wird, beginnt der Schwenkarm 18, dessen unterer Drehpunkt 31 näher zur Welle 11 angeordnet ist als der untere Drehpunkt 32 des Hebearmes, in Richtung der Führung 16 zu wandern und bewirkt über den oberen Schwenkhebel 19, der drehfest mit dem Grillgutträger 2 verbunden ist, jedoch schwenkbar an dem Schwenkarm 18 angeordnet ist, eine Drehbewegung des Grillgutträgers 2.

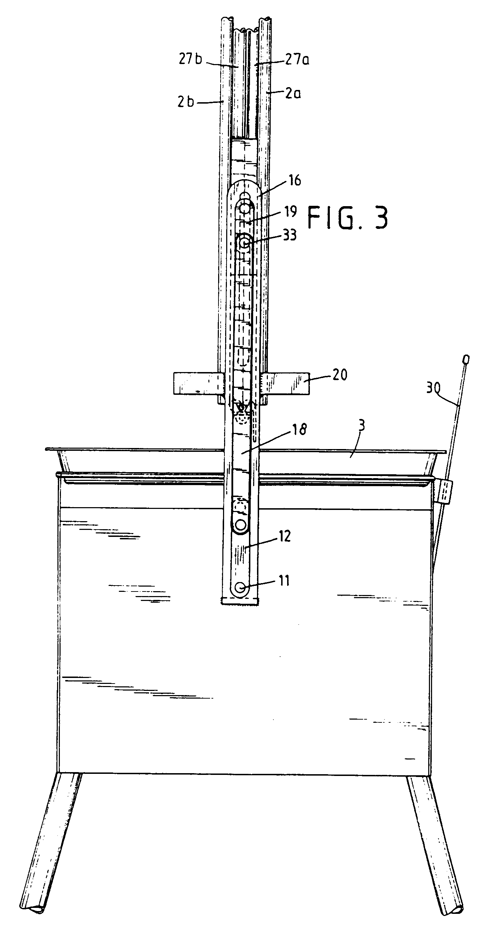

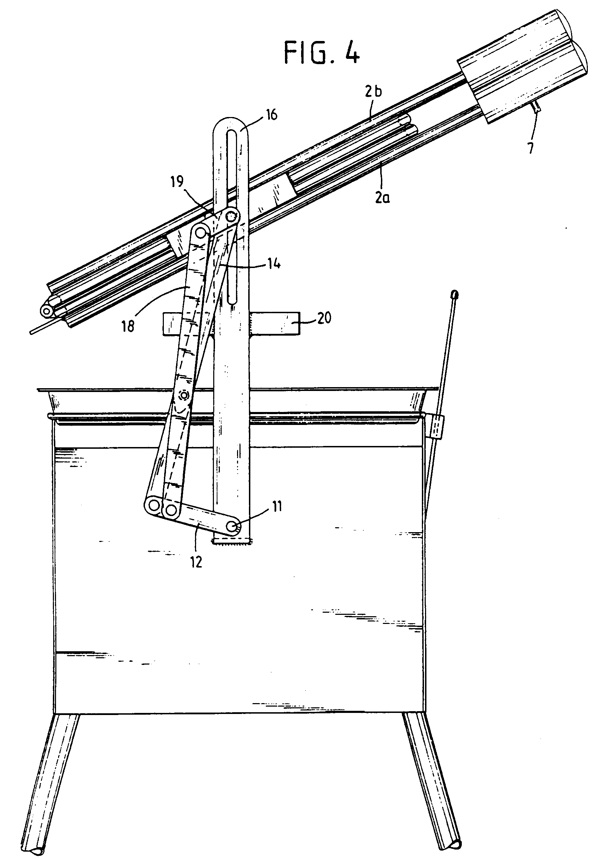

Die oberste Position des Hebearmes 14 und Schwenkarmes 18 ist in Fig. 3 dargestellt. Der Grillgutträger 2 befindet sich in einer vertikalen Position und Hebearm 14, der Schwenkarm 18 sowie die Schwenkhebel 12 und 19 befinden sich in einer Flucht. Bei einer weiteren Drehbewegung des Schwenkhebels 12 würde der Bolzen 15 in der Führung 16 wieder heruntergezogen werden und der Grillgutträger 2 könnte sowohl nach links als auch nach rechts schwenken. Um ein Zurückschwenken des Grillgutträgers 2 in seine Ausgangsposition von Fig. 2 zu vermeiden, befindet sich in der oberen Position von Fig. 3 der Führungsbolzen 22 innerhalb der Klaue 23 und bei einem Schwenken des Hebearmes 14 nach links, zieht die an dem Hebearm angeordnete Klaue 23 über den Führungsbolzen 22 den Schwenkarm 18 ebenfalls nach links. Dadurch erhält der Schwenkarm 18 die gewünschte Richtung und bei einem weiteren Bewegen des Schwenkhebels 12 beginnt der Grillgutträger 2 auf die andere Seite zu schwenken, wie dies in Fig. 4 ersichtlich ist. Die Schwenkbewegung dauert so lange an, bis die Halterung 21 auf dem Träger 20 aufliegt. In dieser Stellung bleibt der Grillgutträger 2, bis das von dem Benutzer vorher eingestellte Ruheintervall beendet worden ist, das beispielsweise einige Minuten betragen kann, danach startet der Motor erneut direkt die Welle in die entgegengesetzte Richtung und bewegt den Grillgutträger 2 in die in Fig. 1 und Fig. 2 dargestellte Position.

Auf der Welle 11 kann ein Flansch angeordnet sein, der eine Öse für die Aufnahme einer Zugfeder aufweist, die z. B. eine Zugkraft von 5 kg entwickelt. Diese nicht dargestellte Zugkraftfeder kann anderenendes auf einer nicht dargestellten Querstrebe zwischen den Standbeinen 4a bis 4d gelagert sein. Diese Zugfeder ermöglicht ein ruckfreies Drehen der Welle 11 und ist eine Drehhilfe für einen eingesetzten Scheibenwischermotor.

## Patentansprüche

1. Grillgerät mit einem über einen Motor drehbar angeordneten, flächig ausgebildeten Grillgutträger (2) und einer Hebe- bzw. Absenkvorrichtung, um den Abstand des Grillgutträgers von einer Heizvorrichtung zumindest während des Drehens des Grillgutträgers zu verändern, gekennzeichnet durch eine kombiniert ausgebildete Dreh- sowie Hebevorrichtung, bestehend aus einem über einen Antrieb schwenkbar ausgebildeten Hebearm (14) und einem Schwenkarm (18), die mit dem Grillgutträger (2) verbunden sind, wobei die Drehpunkte des Schwenkarmes (18) und des Hebearmes (14) voneinander beabstandet ausgebildet sind zugunsten einer Dreh- und Hebebewegung des Grillgutträgers (2) bei gleichzeitiger Bewegung des Hebearmes (14) und des Schwenkarmes (18), wobei der Hebearm (14) und der Schwenkarm (18) Führungselemente (22,23) aufweisen, die sich zumindest über einen Teil der Bewegungsbahn des Hebearmes (14) und des Schwenkarmes (18) miteinander in Eingriff befinden zugunsten einer Zwangsführung des Schwenkarmes (18).

2. Grillgerät gemäß Anspruch 1, gekennzeichnet durch Führungselemente, die einerseits aus einem Führungsbolzen (22) und andererseits aus einer diesen Führungsbolzen (22) aufnehmenden Klaue (23) bestehen.

3. Grillgerät gemäß Anspruch 2, gekennzeichnet durch eine Klaue (23), die im wesentlichen V-förmig ausgebildet ist.

4. Grillgerät gemäß einem der vorhergehenden Ansprüche, gekennzeichnet durch zusammen über eine motorisch angetriebene Welle (11) angetriebenen Hebearm (14) und Schwenkarm(18).

5. Grillgerät gemäß Anspruch 4 gekennzeichnet durch einen Schwenkhebel (12), der zwischen Welle (11) einerseits und Hebearm (14) und Schwenkarm (18) andererseits angeordnet ist.

6. Grillgerät gemäß einem der vorhergehenden Ansprüche, gekennzeichnet durch einen oberen Schwenkhebel (19), der zwischen dem Schwenkarm (18) und dem Grillgutträger (2) angeordnet ist.

7. Grillgerät gemäß einem der vorhergehenden Ansprüche, gekennzeichnet durch einem Grillgutträger (2), der aus zwei übereinander angeordneten, schwenkbar miteinander verbundenen Grillrosten (2a, 2b) besteht.

8. Grillgerät gemäß einem der vorhergehenden Ansprüche, gekennzeichnet durch einen Aus-Schalter für den Motor, der einen Stößel (30) aufweist, der beweglich ausgebildet ist und dessen Stirnseite von dem aufgeklappten Grillgutträger (2) beaufschlagbar ist zugunsten einer Schaltung des Motors auf 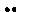 Aus".

## Claims

1. Barbecue having a grilling-food carrier (2), which is of sheet-like design and is arranged such that it can be rotated via a motor, and having a lifting and lowering device in order to change the distance of the grilling-food carrier from a heating device at least during the rotation of the grilling-food carrier, characterized by a combined rotating and lifting device, comprising a lifting arm (14), which is designed such that it can be pivoted via a drive, and a pivot arm (18), said arms being connected to the grilling-food carrier (2), it being the case that the pivot points of the pivot arm (18) and lifting arm (14) are spaced apart from one another in order to provide for a rotating and lifting movement of the grilling-food carrier (2) with simultaneous movement of the lifting arm (14) and of the pivot arm (18), it being the case that the lifting arm (14) and the pivot arm (18) have guide elements (22, 23) which, in order to provide for positive guidance of the pivot arm (18), are in engagement with one another at least over part of the movement path of the lifting arm (14) and of the pivot arm (18).

2. Barbecue according to Claim 1, characterized by guide elements which comprise a guide bolt (22), on the one hand, and, on the other hand, a claw (23) which receives said guide bolt (22).

3. Barbecue according to Claim 2, characterized by a claw (23) which is of essentially V-shaped design.

4. Barbecue according to one of the preceding claims, characterized by the lifting arm (14) and pivot arm (18) which are driven together via a motor-driven shaft (11).

5. Barbecue according to Claim 4, characterized by a pivot lever (12) which is arranged between the shaft (11), on the one hand, and the lifting arm (14) and pivot arm (18), on the other hand.

6. Barbecue according to one of the preceding claims, characterized by a top pivot lever (19), which is arranged between the pivot arm (18) and the grilling-food carrier (2).

7. Barbecue according to one of the preceding claims, characterized by a grilling-food carrier (2) which comprises two grilling gratings (2a, 2b) which are arranged one above the other and are connected to one another in a pivotable manner.

8. Barbecue according to one of the preceding claims, characterized by an OFF switch for the motor, which has a push rod (30) which is of movable design and whose end side can have the swung-open grilling-food carrier (2) acting on it for the purpose of switching the motor to "OFF".

## Revendications

1. Barbecue comprenant un support en forme de grille pour aliments (2) plat agencé de manière rotative sur un moteur et un dispositif de levage et d'abaissement, afin de changer la distance entre le support en forme de grille pour aliments et un dispositif de chauffage au moins pendant la rotation du support en forme de grille pour aliments, caractérisé en ce qu'un dispositif de rotation et de levage conçu de manière combinée se compose d'un bras de levage (14) conçu pour pivoter sur un dispositif d'entraînement et d'un bras pivotant (18), qui sont reliés au support en forme de grille pour aliments (2), les points de rotation du bras pivotant (18) et du bras de levage (14) étant conçus de manière à être espacés l'un de l'autre au profit d'un mouvement de rotation et de levage du support en forme de grille pour aliments (2) lors du mouvement simultané du bras de levage (14) et du bras pivotant (18), le bras de levage (14) et le bras pivotant (18) présentant des éléments de guidage (22, 23), qui se trouvent en prise au moins sur une partie du trajet de mouvement du bras de levage (14) et du bras pivotant (18) au profit d'un guidage forcé du bras pivotant (18).

2. Barbecue selon la revendication 1, caractérisé par des éléments de guidage, qui se composent d'une part d'un boulon de guidage (22) et d'autre part d'une griffe (23) recevant ce boulon de guidage (22).

3. Barbecue selon la revendication 2, caractérisé par une griffe (23), qui est sensiblement en forme de V.

4. Barbecue selon l'une quelconque des revendications précédentes, caractérisé par un bras de levage (14) et un bras pivotant (18) actionnés par un arbre (11) motorisé.

5. Barbecue selon la revendication 4, caractérisé par un levier pivotant (12) agencé entre l'arbre (11) d'une part et le bras de levage (14) et le bras pivotant (18) d'autre part.

6. Barbecue selon l'une quelconque des revendications précédentes, caractérisé par un levier pivotant (19) supérieur, qui est agencé entre le bras pivotant (18) et le support en forme de grille (2).

7. Barbecue selon l'une quelconque des revendications précédentes, caractérisé par un support pour aliments en forme de grille (2), qui se compose de deux grilles (2a, 2b) agencées l'une sur l'autre et reliées de manière pivotante l'une avec l'autre.

8. Barbecue selon l'une quelconque des revendications précédentes, caractérisé par un interrupteur "ARRET" pour le moteur qui présente un coulisseau (30), qui est conçu de manière mobile et dont la face avant peut être sollicitée par le support décapotable en forme de grille pour aliments (2) au profit d'un circuit du moteur sur "arrêt".
